# EUROPEAN PATENT SPECIFICATION

(11) **EP 3 876 771 B1**
(45) Date of publication and mention of the grant of the patent: **06.04.2022**
(21) Application number: 19821310.0
(22) Date of filing: 09.12.2019
(51) Int. Cl.: A41D 13/015

(54) **MATERIAL FOR VIBRATION DAMPING AND WEARABLE GARMENT COMPRISING SUCH A MATERIAL**
MATERIAL ZUR SCHWINGUNGSDÄMPFUNG UND TRAGBARES KLEIDUNGSSTÜCK MIT EINEM SOLCHEN MATERIAL
MATÉRIAU POUR AMORTISSEMENT DE VIBRATIONS ET VÊTEMENT À PORTER COMPRENANT UN TEL MATÉRIAU

(30) Priority: 10.12.2018 SE 1851539
(43) Date of publication of application: 15.09.2021
(73) Proprietor: Ejendals Aktiebolag, 793 32 Leksand (SE)
(72) Inventor: NYSTRÖM, Hans, 167 14 Bromma (SE)
(74) Representative: Bergenstråhle & Partners AB
(86) International application number: PCT/SE2019/051253
(87) International publication number: WO 2020/122795

(56) References cited:
- EP-A1- 1 369 149
- WO-A1-2016/170167
- US-A1- 2006 206 977

## Description

### Technical field

The present invention relates generally to a vibration damping material suitable for use in a wearable garment and garments comprising such a material.

### Background art

Exposure of the human body to repeated vibration is a known problem. Such exposure can occur in various settings: both occupational and recreational. It is known, for example, that extended exposure of the human body to vibration can lead to vascular, neurological and musculoskeletal disorders. One differs between two types of vibration exposure: hand-arm vibration (HAV) and whole-body vibration (WBV).

The source of vibrations related to HAV exposure is commonly some type of mechanical device, such as a hand-held vibrating tool. In the case of HAV exposure, resultant disorders typically manifest in the body's upper limbs such as in the form of vibration white fingers (vascular effect), numbness, reduced tactile sensitivity and/or manual dexterity (neurological disturbances), effects on the locomotor system (muscles, bones, joints, tendons), as well as effects on comfort and performance of the affected person.

WBV exposure, as the name indicates, stems from vibrations that affect the entire body, such as may be transmitted through the seat of an industrial vehicle. A multiplicity of vehicles may transmit such vibration: from large outdoor earthmoving equipment to buses and trucks to commonly used forklifts and tow motors, for example. Rather than causing a problem with a particular limb or limbs, however, WBV exposure commonly results in a number of health disorders such as circulatory, bowel, respiratory, muscular and spinal system disorders.

Various types of protective equipment have been produced in an effort to combat the aforementioned problems. Of particular interest are gloves that have been designed to reduce the amount of vibration force transmitted to the hand when using devices such as hand-held power (vibrating) tools, or when using the hand as an impact tool. Other articles have also been developed in this pursuit, including, for example, shoe soles and shoe inserts. These articles may make use of different material compositions, multiple air bladders, and/or various other designs and techniques to achieve a reduction in vibration transmission.

For instance, US 2006/0206977 discloses a multi-layered vibration absorbent material, wherein each layer contains a number of holes that are offset in relation to holes in an adjacent layer.

US 2010/0083420 discloses a glove comprising a cladding applied to a base structure in a gripping region, the cladding presenting a plurality of micro-craters in a deformable material which increase the friction and partially dampen any impacts or vibrations.

However, the above-mentioned materials are complex to manufacture which drives cost and/or still transmit a considerable amount of vibrations to the body of the wearer. Thus, there is a need for an improved material which reduces the amount of impact and vibrations transmitted to the body of the wearer.

### Summary of Invention

An object of the present invention is to provide an improved material which reduces the amount of impact and vibrations transmitted to the body of the wearer. This object is achieved in a first aspect of the invention, in which there is provided a vibration damping material suitable for use in a wearable garment, comprising a sheet of a flexible material with a first and a second side, both comprising a plurality of protrusions arranged in a predetermined pattern, wherein the protrusions on the first and/or second side of the sheet are arranged to be equidistant from adjacent protrusions, wherein the protrusions are distributed in a substantially uniform pattern throughout the first and/or second side of the sheet of flexible material, wherein the protrusions on the first side of the sheet are arranged to be offset with respect to the protrusions on the second side of the sheet of flexible material.

By providing protrusions on both sides of a sheet of flexible material, arranged to be equidistant from adjacent protrusions, distributed in a substantially uniform pattern throughout the first and/or second side of the sheet, and arranged to be offset with respect to each other, the effect of impacts and vibration is considerably reduced compared to known structures and materials. The equidistant/uniform pattern of the protrusions facilitates manufacture and ensures their offset location to achieve optimal cancellation of vibrations. The offset pattern of protrusions enables local movement of the sheet in opposite directions to cancel out the vibration such that the amount of vibration transmitted to a user is significantly decreased. The sheet and the protrusions may be integrally formed through moulding to facilitate the manufacturing process and reduce costs.

In a further preferred embodiment, the sheet of flexible material has a thickness in the range 0.5-2 mm, preferably 0.8-1.5 mm. The thickness of the sheet may be adapted to the intended use and application of the vibration damping material, wherein a thicker material may be chosen e.g. when vibrations of high amplitude and/or force are expected. Correspondingly, a thinner material may be chosen when vibrations of a high frequency and/or low to moderate force are expected.

In an advantageous embodiment, the protrusions are solid. Alternatively, the protrusions are hollow. Preferably, the protrusions are solid on the first side of the sheet and hollow on the second side of the sheet, or vice versa. Any combination of solid and hollow protrusions on the first and/or second side of the sheet is also foreseen in the present invention. Hollow protrusions are deformable to a higher degree than solid protrusions and may therefore absorb more impacts and vibrations. On the other hand, solid protrusions may be made smaller in diameter and therefore arranged with a higher density per unit area.

In an alternative embodiment, a through-going hole is arranged at the centre of each protrusion on the first and/or second side of the sheet. The through-going holes further adds deformability of the protrusions and increases the overall flexibility of the sheet. Additionally, the weight of the sheet of flexible material is decreased.

In a further preferred embodiment, the protrusions have a wall thickness in the range 1-2 times the thickness of the sheet of flexible material. The wall thickness of the protrusions affects the deformability, and therefore also the ability of the protrusions to absorb impacts and vibrations.

In an advantageous embodiment, the protrusions are substantially cylindrical. In an alternative embodiment, the protrusions are substantially frusto-conical. In yet another alternative embodiment, the protrusions are substantially hexagonal and form a honeycomb structure. The shape of the protrusions provides different advantageous deformation characteristics to achieve optimal absorption of impacts and vibration.

In a preferred embodiment, the protrusions have a height approximately 1-3 times the thickness of the sheet of flexible material. Preferably, the protrusions have a diameter in the range 1-5 times the height of the protrusions. The height and diameter of the protrusions may be varied to achieve optimal absorption of impacts and vibration, depending on specific applications and situations (e.g. force of expected impact and/or frequency and amplitude as well as duration of expected vibration).

In an alternative embodiment, the flexible material is selected from the group comprising elastomers, natural rubber and/or synthetic rubber. The choice of material may be adapted to specific applications and situations (e.g. type of wearable garment, environment of expected use, preferences of user etc.).

In a second aspect of the present invention, there is provided a wearable garment comprising a vibration damping material according to the first aspect. Preferably, the wearable garment is a glove, a shoe, a shoe insole, a protective pad, or a helmet.

### Brief Description of Drawings

The invention is now described, by way of example, with reference to the accompanying drawings, in which:
Fig. 1 shows a perspective view of an embodiment of the vibration damping material according to the present invention;
Figs. 2A and 2B show cross-sectional views of the vibration damping material of Fig. 1 taken along two different lines of intersection;
Figs. 3A-3E show cross-sectional views of further embodiments of the vibration damping material according to the present invention;
Fig. 4 shows a perspective view of an alternative embodiment of the vibration damping material according to the present invention;
Fig. 5 shows a cross-sectional view of the alternative embodiment of the vibration damping material in Fig. 4;
Fig. 6 shows an embodiment of the vibration damping material according to the present invention in a protective glove; and
Fig. 7 shows a user wearing a protective glove with a vibration damping material according to the present invention when handling a vibrating object/tool.

### Description of Embodiments

In the following, a detailed description of a vibration damping material according to the present invention is presented. In the drawing figures, like reference numerals designate identical or corresponding elements throughout the several figures. It will be appreciated that these figures are for illustration only and are not in any way restricting the scope of the invention.

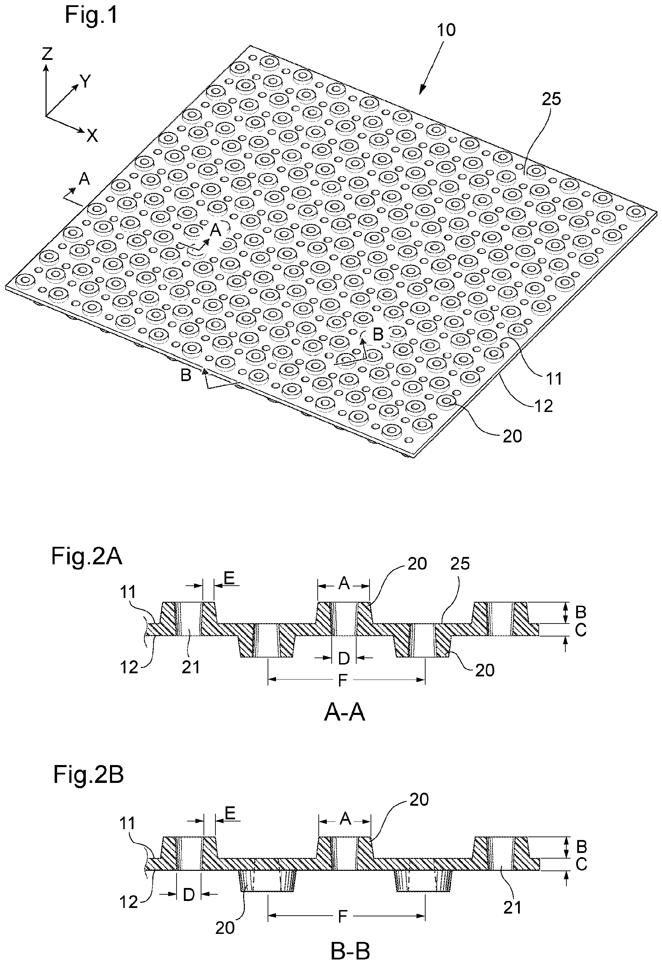

In Fig. 1, a sheet 10 of flexible vibration damping material is shown. The first side 11 of the sheet 10 facing upwards is shown illustrating the protrusions 20. The protrusions 20 are distributed in a predetermined pattern over the first side 11 of the sheet 10. On the second, opposite side 12 of the sheet 10 facing downwards a similar or identical pattern of protrusions 20 are arranged offset with respect to the protrusions 20 on the first side 11. The offset arrangement of the protrusions 20 is such that adjacent each protrusion 20 on the first side 11 of the sheet 10, there is generally four flat or empty spaces 25, unoccupied by protrusions 20, surrounding the protrusion 20. The alternating pattern of protrusions 20 and unoccupied spaces 25 is repeated across the sheet 10 of flexible material to create a substantially uniform distribution.

Depending on the cutting direction of the edges of the sheet 10 and the location of the protrusions 20 on the sheet 10 (in the middle, along the edges, in the corners), the number of unoccupied spaces 25 surrounding the protrusions 20 may vary from one to four.

In the locations corresponding to these unoccupied spaces 25 on the second, opposite side of the sheet 10, there are arranged protrusions 20 similar or identical to the protrusions 20 on the first side 11 of the sheet 10. Thus, the protrusions 20 on the opposite sides of the sheet 10 of material are arranged offset in relation to each other.

Fig. 1 illustrates one embodiment of the sheet 10 of vibration damping material wherein the protrusions 20 comprise a central, through-going hole 21 further shown in Figs 2C and 2F as discussed further below. Due to the offset arrangement of the protrusions 20 on opposite sides 11, 12 of the sheet 10, the hole 21 of each protrusion 20 on the first side 11 is located in an unoccupied space 25 on the opposite, second side 12 of the sheet 10, and vice versa.

The vibration damping material of the present invention comprises a flexible material, preferably an elastomer such as e.g. natural rubber, synthetic rubber or a combination thereof. Due to the flexible nature of the sheet 10 of material, as well as the deformability of the protrusions 20, impacts and vibrations applied to the vibration damping material according to the present invention are absorbed to a high degree, thereby reducing the amount of impact and vibration transmitted to e.g. a user wearing a garment incorporating the material.

The vibration absorption abilities of a material of the present invention are believed to be improved by the offset pattern of the protrusions 20 on the first and second sides 11, 12 of the sheet 10, which allows for increased material deflection. More specifically, when a material of the present invention is subjected to a vibration force, the presence of the protrusions 20 and their offset arrangement provides an additional dimension (direction) of deflection for the material surrounding the area of impact. For example, when a material of the present invention is subjected to a vibration force, the force can be absorbed/dissipated not only by a general deformation or deflection of the sheet 10 of material, but also by deformation in opposite directions of the protrusions 20 located on the first and second sides 11, 12, respectively, thereof. The offset pattern of protrusions 20 and unoccupied spaces 25 provides voids into which the material of the sheet 10 can be deflected, thereby allowing for increased absorption properties in a direction substantially perpendicular to the surface of the sheet 10 of material. The protrusions 20 also allow for absorption/dissipation of laterally directed forces in that the protrusions 20 may deform and deflect in a direction substantially parallel to the surface of the sheet 10 of material. The individual protrusions 20 may allow for varying degrees of perpendicular and/or lateral deformation across the sheet 10 of material depending on the properties (amplitude, frequency, wavelength, spatial direction) and strength (force, magnitude) of the vibration.

Fig. 2A illustrates the arrangement of protrusions 20 and unoccupied spaces 25 on the sheet 10 in a cross-sectional view taken along the line A-A in Fig. 1, parallel to the long edges of the sheet 10. In this view, the line of intersection passes centrally through the protrusions 20 and unoccupied spaces 25 on both sides 11, 12, respectively of the sheet 10.

Similarly, Fig. 2B illustrates the arrangement of protrusions 20 on the sheet 10 in a cross-sectional view taken along the line B-B in Fig. 1, oriented at approximately 45° to the long edges of the sheet 10. In this view, the line of intersection passes centrally through adjacent protrusions 20, but not through the unoccupied spaces 25, on both sides 11, 12, respectively of the sheet 10.

The height of the protrusions 20 may be selected depending on desired vibration damping properties of the material. In the embodiment shown in Figs. 2A and 2B, the height B of the protrusions 20 is about 2 times the thickness C of the sheet 10 of material. It is foreseen that the height B of the protrusions 20 may be in the range 1-3 times the thickness C of the sheet 10. For instance, the sheet 10 may have a thickness C of between 0.5 mm and 2 mm, preferably between 0.8 mm and 1.5 mm and the height B of the protrusions 20 may range from 0.5 mm to 6 mm, preferably 0.8 mm to 4.5 mm.

The hollow protrusions 20 may have a wall thickness E ranging from 1-2 times the thickness C of the sheet 10, i.e. between 0.5 mm and 4 mm, preferably from 0.8 mm to 3 mm. The through-going hole 21 may have a diameter D in the range 1-3 times the thickness C of the sheet 10, i.e. between 0.5 mm and 6 mm, preferably from 0.8 mm to 4.5 mm. Additionally, the diameter A of the protrusions 20 may fall in the range 1-5 times the thickness C of the sheet 10, i.e. between 0.5 mm and 10 mm, preferably from 0.8 mm to 7.5 mm.

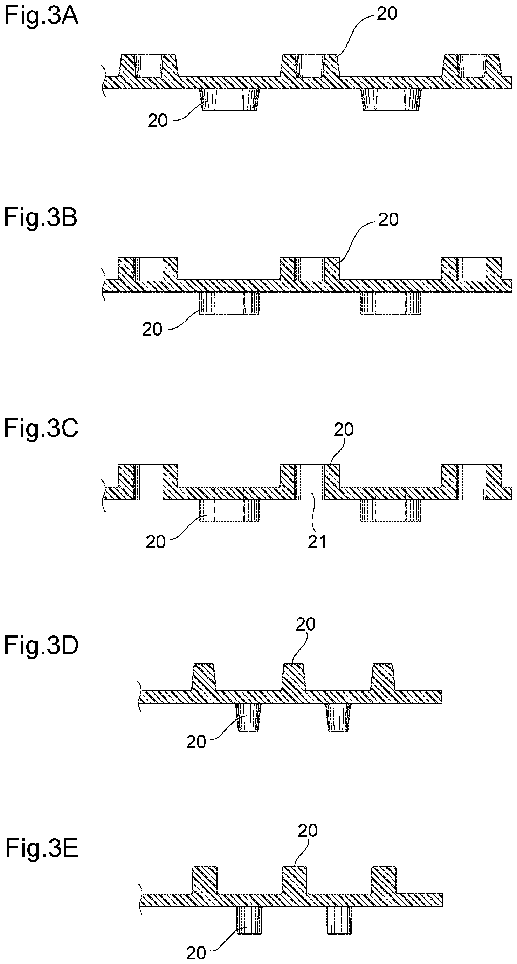

In the embodiment illustrated in Figs. 3D and 3E, the protrusions 20 are illustrated as being solid and having a height B comparable with the height B of the hollow protrusions 20, but a smaller diameter A roughly equal to or slightly bigger than the thickness C of the sheet 10. Of course, the height B and diameter A of the protrusions 20 may be varied within the intervals defined above.

The distance F between neighbouring or adjacent protrusions 20 in the direction of intersection line A-A in Fig. 1 is illustrated in Fig. 2B only. According to one embodiment, the protrusions 20 are arranged equidistant from adjacent protrusions 20. In the context of the present invention, the term 'adjacent protrusion' shall be understood as any of the surrounding protrusions 20 located closest to the protrusion 20 in question. For instance, the distance F may correspond to the smallest radius of a circle centred on protrusion 20 having adjacent protrusions 20 located on the circumference of that circle. In the pattern shown in Fig. 1, four protrusions 20 are located adjacent each central protrusion 20, evenly distributed about the circumference of the circle. In one embodiment, the distance F may fall in the range 3-5 times the diameter of the protrusions, ranging from 1.5 mm to 50 mm, preferably from 2.4 mm to 37.5 mm.

Turning now to Figs. 3A-3E, there is shown cross-sectional views of several embodiments of a vibration damping material according to the present invention, taken along a line of intersection similar to line B-B in Fig. 1, i.e. at approximately 45° to the long edges of the sheet 10.

In the embodiments illustrated in Figs. 3A-3C, the protrusions 20 are hollow, and may also comprise a centrally located, through-going hole 21 passing through the sheet 10 as illustrated in Fig. 3C, as well as Figs. 2A and 2B. The protrusions 20 may be either substantially cylindrical (Figs. 3B and 3C) or have a frusto-conical shape (Fig. 3A). In alternative embodiments illustrated in Figs. 3D and 3E, the protrusions 20 are solid with either a frusto-conical (Fig. 3D) or cylindrical (Fig. 3E) shape.

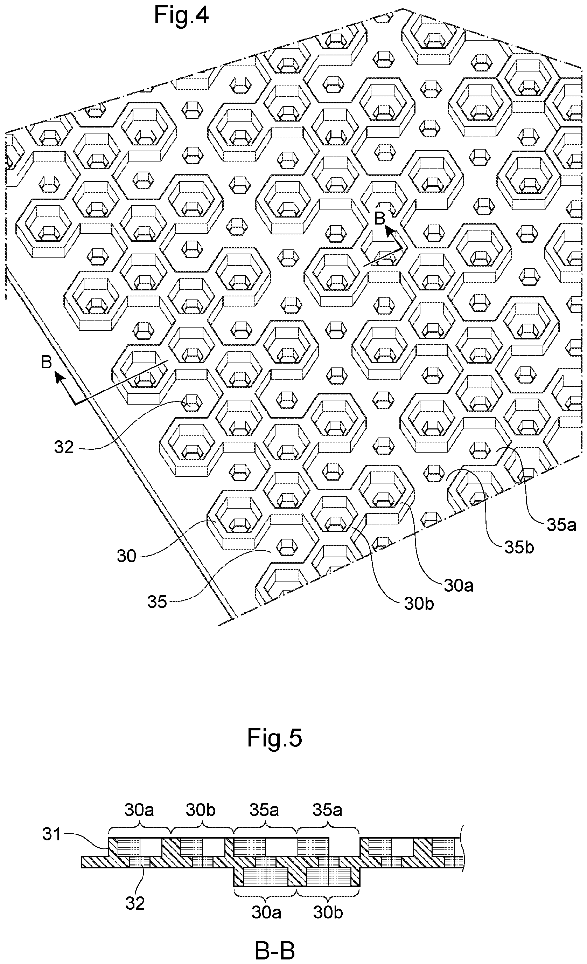

Fig. 4 shows an alternative embodiment of the vibration damping material according to the present invention. The pattern of protrusions 30 is here made up of a plurality of substantially hexagonal spaces or cells which together form a honeycomb structure. The pattern of protrusions 30 is formed such that adjacent each hexagonal protrusion 30 there are at least three unoccupied spaces 35 35. In this embodiment, a hexagonal protrusion 30 shall be understood as a hexagonal cell wherein all six sides of the hexagon comprise a ridge 31 protruding from the surface of the sheet 10. Conversely, an unoccupied space 35 shall be understood as a hexagonal cell wherein at least one of the six sides of the hexagon is level with the surface of the sheet 10 of material, i.e. it does not comprise a ridge 31 protruding from the surface of the sheet 10.

In the honeycomb structure or pattern illustrated in Fig. 4, two types of hexagonal protrusions 30 and two types of unoccupied spaces 35 may be discerned. A first type of hexagonal protrusion 30a adjoins exactly one other hexagonal protrusion 30 on one of its six sides, thus sharing one protruding ridge 31 with the adjoining hexagonal protrusion 30. A second type of hexagonal protrusion 30b adjoins exactly three other hexagonal protrusion 30 on three of its six sides, thus sharing three protruding ridges 31 with the adjoining hexagonal protrusions 30. The three adjoining hexagonal protrusions 30 are evenly distributed about the periphery of the central, second type hexagonal protrusion 30b. As may be seen in Fig. 4, all first type hexagonal protrusions 30a each adjoins one second type hexagonal protrusion 30b, whereas the second type hexagonal protrusions 30b all adjoin one first type hexagonal protrusion 30a and two second type hexagonal protrusions 30b.

A first type of unoccupied space 35a comprises a hexagonal cell surrounded by five contiguous hexagonal protrusions 30, i.e. one side of the hexagon is level with the surface of the sheet 10 of material. A second type of unoccupied space 35b comprises a hexagonal cell surrounded by three non-contiguous contiguous hexagonal protrusions 30, i.e. the remaining three sides of the hexagon, uniformly distributed about the periphery thereof, are level with the surface of the sheet 10 of material. As may be seen in Fig. 4, all of the first type unoccupied spaces 35a each adjoins one second type unoccupied space 35b, whereas the second type unoccupied spaces 35b all adjoin one first type unoccupied space 35a and two second type unoccupied spaces 35b.

Each of the hexagonal cells in the honeycomb structure, both hexagonal protrusions 30 and unoccupied spaces 35, may comprise a centrally located, through-going hole 32. The holes 32 may be generally circular or hexagonal to conform to the shape of the hexagonal cells. The diameter of the holes may range from 1.5 mm to 3 mm, about 2-4 times the thickness of the sheet 10.

A cross-sectional view taken along section B-B of the sheet 10 illustrated in Fig. 4 is shown in Fig. 5. As explained above, the offset patterns of hexagonal protrusions 30 and unoccupied spaces 35 provide additional dimensions (directions) of deflection for the material surrounding the area of impact, i.e. forces applied both perpendicular and lateral to the sheet 10 of vibration damping material.

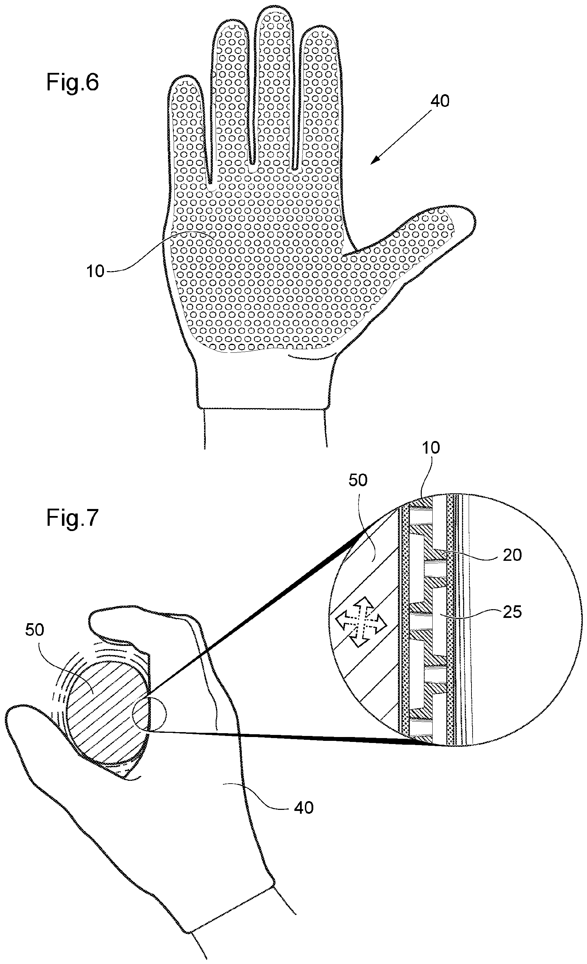

Turning now to Fig. 6, there is shown a sheet 10 of vibration damping material according to the present invention incorporated in a protective glove 40. Of course, the vibration damping material may be incorporated in any type of suitable protective garment worn on different parts of the body, such as e.g. a glove, a shoe, a shoe insole, a protective pad (elbow, knee, shin, wrist, shoulder etc.), a helmet, clothing articles (trousers, shirts, sweaters etc.). A sheet 10 of vibration damping material including protrusions 20; 30 and unoccupied spaces 25; 35 according to any of the embodiments presented above may be incorporated as a layer in the protective garment, partly or wholly covering an area exposed to vibration. In the example of a protective glove 40, the vibration damping material may be arranged in the palm of the hand, on one or more fingers or on parts thereof in combination.

Fig. 7 shows an example of a user operating a vibrating tool 50 whilst wearing a protective glove 40 incorporating a sheet 10 of vibration damping material according to the present invention including protrusions 20 and unoccupied spaces 25 on both sides in an offset pattern. In the close-up view on the right-hand side of Fig. 7, the vibrating tool 50 is shown to vibrate by means of arrows. These vibrations are absorbed/damped by the sheet 10 of vibration damping material, more specifically by deformation and deflection of the protrusions 20 both perpendicular and parallel to the surface of the sheet 10 of vibration damping material.

Preferred embodiments of a vibration damping material according to the invention have been described. However, the person skilled in the art realises that this can be varied within the scope of the appended claims without departing from the inventive idea.

## Claims

1. A vibration damping material suitable for use in a wearable garment, comprising a sheet (10) of a flexible material with a first and a second side (11, 12), **characterised by**
both comprising a plurality of protrusions (20; 30) arranged in a predetermined pattern, wherein the protrusions (20; 30) on the first and/or second side (11, 12) of the sheet (10) are arranged to be equidistant from adjacent protrusions (20; 30), wherein the protrusions (20; 30) are distributed in a substantially uniform pattern throughout the first and/or second side (11, 12) of the sheet (10) of flexible material, wherein
the protrusions (20; 30) on the first side (11) of the sheet (10) are arranged to be offset with respect to the protrusions (20; 30) on the second side (12) of the sheet (10) of flexible material.

2. The vibration damping material according to claim 1, wherein the sheet (10) has a thickness (C) in the range 0.5-2 mm, preferably 0.8-1.5 mm.

3. The vibration damping material according to claim 1 or 2, wherein the protrusions (20) are solid.

4. The vibration damping material according to claim 1 or 2, wherein the protrusions (20; 30) are hollow.

5. The vibration damping material according to claim 1 or 2, wherein the protrusions (20) are solid on the first side (11) of the sheet (10) and hollow on the second side (12) of the sheet (10), or vice versa.

6. The vibration damping material according to claim 4 or 5, wherein a through-going hole (21; 32) is arranged at the centre of each hollow protrusion (20; 30) on the first and/or second side (11, 12) of the sheet (10).

7. The vibration damping material according to any one of claims 4-6, wherein the hollow protrusions (20; 30) have a wall thickness (E) in the range 1-2 times the thickness (C) of the sheet (10) of flexible material.

8. The vibration damping material according to any one of the preceding claims, wherein the protrusions (20) are substantially cylindrical.

9. The vibration damping material according to any one of claims 1-7, wherein the protrusions (20) are substantially frusto-conical.

10. The vibration damping material according to any one of claims 1-7, wherein the protrusions (30) are substantially hexagonal and form a honeycomb structure.

11. The vibration damping material according to any one of the preceding claims, wherein the protrusions (20; 30) have a height (B) approximately 1-3 times the thickness (C) of the sheet (10) of flexible material.

12. The vibration damping material according to any one of the preceding claims, wherein the protrusions (20; 30) have a diameter (A) in the range 1-5 times the height (B) of the protrusions (20; 30).

13. The vibration damping material according to any one of the preceding claims, wherein the flexible material is selected from the group comprising elastomers, natural rubber and/or synthetic rubber.

14. A wearable garment comprising a vibration damping material according to any one of the preceding claims.

15. The wearable garment according to claim 14, wherein the wearable garment is a glove (40), a shoe, a shoe insole, a protective pad, or a helmet.

## Patentansprüche

1. Schwingungsdämpfendes Material, das zur Verwendung in einem tragbaren Kleidungsstück geeignet ist, das eine Bahn (10) aus einem biegsamen Material mit einer ersten und einer zweiten Seite (11, 12) umfasst, **dadurch gekennzeichnet, dass**
beide eine Vielzahl von Vorsprüngen (20; 30) umfassen, die in einem vorbestimmten Muster angeordnet sind, wobei die Vorsprünge (20; 30) auf der ersten und/oder zweiten Seite (11, 12) der Bahn (10) äquidistant zu benachbarten Vorsprüngen (20; 30) angeordnet sind, wobei die Vorsprünge (20; 30) in einem im Wesentlichen gleichmäßigen Muster über die erste und/oder zweite Seite (11, 12) der Bahn (10) aus biegsamem Material verteilt sind, wobei
die Vorsprünge (20; 30) auf der ersten Seite (11) der Bahn (10) so angeordnet sind, dass sie in Bezug auf die Vorsprünge (20; 30) auf der zweiten Seite (12) der Bahn (10) aus biegsamem Material versetzt angeordnet sind.

2. Schwingungsdämpfendes Material nach Anspruch 1, wobei die Bahn (10) eine Dicke (C) im Bereich von 0,5-2 mm, vorzugsweise 0,8-1,5 mm, aufweist.

3. Schwingungsdämpfendes Material nach Anspruch 1 oder 2, wobei die Vorsprünge (20) massiv sind.

4. Schwingungsdämpfendes Material nach Anspruch 1 oder 2, wobei die Vorsprünge (20; 30) hohl sind.

5. Schwingungsdämpfendes Material nach Anspruch 1 oder 2, wobei die Vorsprünge (20) auf der ersten Seite (11) der Bahn (10) massiv und auf der zweiten Seite (12) der Bahn (10) hohl sind, oder umgekehrt.

6. Schwingungsdämpfendes Material nach Anspruch 4 oder 5, wobei ein Durchgangsloch (21; 32) in der Mitte eines jeden hohlen Vorsprungs (20; 30) auf der ersten und/oder der zweiten Seite (11, 12) der Bahn (10) angeordnet ist.

7. Schwingungsdämpfendes Material nach einem der Ansprüche 4-6, wobei die hohlen Vorsprünge (20; 30) eine Wanddicke (E) im Bereich vom 1- bis 2-fachen der Dicke (C) der Bahn (10) aus biegsamem Material aufweisen.

8. Schwingungsdämpfendes Material nach einem der vorstehenden Ansprüche, wobei die Vorsprünge (20) im Wesentlichen zylindrisch sind.

9. Schwingungsdämpfendes Material nach einem der Ansprüche 1-7, wobei die Vorsprünge (20) im Wesentlichen kegelstumpfförmig sind.

10. Schwingungsdämpfendes Material nach einem der Ansprüche 1-7, wobei die Vorsprünge (30) im Wesentlichen hexagonal sind und eine Wabenstruktur bilden.

11. Schwingungsdämpfendes Material nach einem der vorstehenden Ansprüche, wobei die Vorsprünge (20; 30) eine Höhe (B) von etwa dem 1- bis 3-fachen der Dicke (C) der Bahn (10) aus biegsamem Material aufweisen.

12. Schwingungsdämpfendes Material nach einem der vorstehenden Ansprüche, wobei die Vorsprünge (20; 30) einen Durchmesser (A) im Bereich vom 1- bis 5-fachen der Höhe (B) der Vorsprünge (20; 30) aufweisen.

13. Schwingungsdämpfendes Material nach einem der vorstehenden Ansprüche, wobei das biegsame Material aus der Elastomere, Naturkautschuk und/oder synthetischen Kautschuk umfassenden Gruppe ausgewählt ist.

14. Tragbares Kleidungsstück, das ein schwingungsdämpfendes Material nach einem der vorstehenden Ansprüche umfasst.

15. Tragbares Kleidungsstück nach Anspruch 14, wobei es sich beim tragbaren Kleidungsstück um einen Handschuh (40), einen Schuh, eine Schuheinlegesohle, ein Schutzpolster oder einen Helm handelt.

## Revendications

1. Matériau d'amortissement des vibrations convenant à une utilisation dans un vêtement à porter, comprenant une feuille (10) d'un matériau souple avec une première et une seconde face (11, 12) **caractérisé en ce qu'**il
comprend une pluralité de saillies (20; 30) agencées selon un modèle prédéterminé, dans lequel les saillies (20 ; 30) sur la première et/ou seconde face (11, 12) de la feuille (10) sont agencées pour être équidistantes par rapport à des saillies adjacentes (20 ; 30), dans lequel les saillies (20; 30) sont réparties selon un modèle sensiblement uniforme tout le long de la première et/ou seconde face (11, 12) de la feuille (10) du matériau souple, dans lequel
les saillies (20 ; 30) sur la première face (11) de la feuille (10) sont agencées pour être décalées par rapport aux saillies (20 ; 30) sur la seconde face (12) de la feuille (10) de matériau souple.

2. Matériau d'amortissement des vibrations selon la revendication 1, dans lequel la feuille (10) a une épaisseur (C) dans la plage de 0,5 à 2 mm, de préférence 0,8 à 1,5 mm.

3. Matériau d'amortissement des vibrations selon la revendication 1 ou 2, dans lequel les saillies (20) sont solides.

4. Matériau d'amortissement des vibrations selon la revendication 1 ou 2, dans lequel les saillies (20 ; 30) sont creuses.

5. Matériau d'amortissement des vibrations selon la revendication 1 ou 2, dans lequel les saillies (20) sont solides sur la première face (11) de la feuille (10) et creuses sur la seconde face (12) de la feuille (10), ou inversement.

6. Matériau d'amortissement des vibrations selon la revendication 4 ou 5, dans lequel un trou traversant (21 ; 32) est agencé au centre de chaque saillie creuse (20 ; 30) sur la première et/ou la seconde face (11, 12) de la feuille (10).

7. Matériau d'amortissement des vibrations selon l'une quelconque des revendications 4 à 6, dans lequel les saillies creuses (20; 30) ont une épaisseur de paroi (E) dans la plage de 1 à 2 fois l'épaisseur (C) de la feuille (10) de matériau souple.

8. Matériau d'amortissement des vibrations selon l'une quelconque des revendications précédentes, dans lequel les saillies (20) sont sensiblement cylindriques.

9. Matériau d'amortissement des vibrations selon l'une quelconque des revendications 1 à 7, dans lequel les saillies (20) sont sensiblement tronconiques.

10. Matériau d'amortissement des vibrations selon l'une quelconque des revendications 1 à 7, dans lequel les saillies (30) sont sensiblement hexagonales et forment une structure alvéolaire.

11. Matériau d'amortissement des vibrations selon l'une quelconque des revendications précédentes, dans lequel les saillies (20 ; 30) ont une hauteur (B) d'approximativement 1 à 3 fois l'épaisseur (C) de la feuille (10) de matériau souple.

12. Matériau d'amortissement des vibrations selon l'une quelconque des revendications précédentes, dans lequel les saillies (20 ; 30) ont un diamètre (A) dans la plage de 1 à 5 fois la hauteur (B) des saillies (20 ; 30).

13. Matériau d'amortissement des vibrations selon l'une quelconque des revendications précédentes, dans lequel le matériau souple est sélectionné dans le groupe comprenant des élastomères, du caoutchouc naturel et/ou du caoutchouc synthétique.

14. Vêtement à porter comprenant un matériau d'amortissement des vibrations selon l'une quelconque des revendications précédentes.

15. Vêtement à porter selon la revendication 14, dans lequel le vêtement à porter est un gant (40), une chaussure, une semelle de chaussure, un coussinet protecteur ou un casque.
